# Europäisches Patentamt

# European Patent Office

# Office européen des brevets

(19)

(11) Veröffentlichungsnummer: **0 049 211**
**A1**

## EUROPÄISCHE PATENTANMELDUNG

(12)

(21) Anmeldenummer: 81730086.6

(22) Anmeldetag: 01.09.81

(51) Int. Cl.³: **H 04 M 3/62, H 04 Q 3/00**

(30) Priorität: 30.09.80 DE 3037362

(43) Veröffentlichungstag der Anmeldung: 07.04.82
Patentblatt 82/14

(84) Benannte Vertragsstaaten: **AT BE CH FR GB IT LI NL SE**

(71) Anmelder: **SIEMENS AKTIENGESELLSCHAFT Berlin und München, Postfach 22 02 61, D-8000 München 22 (DE)**

(72) Erfinder: **Achmüller, Andreas, Ing. grad., Oberstdorferstrasse 12, D-8000 München 71 (DE)**
Erfinder: **Klug, Eberhard, Ing. grad., Stridbeckstrasse 10, D-8000 München 71 (DE)**
Erfinder: **Scholz, Dieter, Weilbachstrasse 12, D-8061 Prittlbach (DE)**

(54) **Schaltungsanordnung für zentralgesteuerte Fernsprechanlagen, insbesondere Fernsprechnebenstellenanlagen und private Fernsprechsonderanlagen, mit zumindest einem Vermittlungsplatz und einer diesem zugeordneten Informationsverarbeitungseinrichtung.**

(57)  Die Informationsverarbeitungseinrichtung (IVE) ist vermittlungsplatzorientiert und weist mehrere Mikrocomputer (MC. . .) auf, wobei der erste Mikrocomputer (MC1) die Sprachinformationserkennung und -umsetzung steuert, während der zweite Mikrocomputer (MC2) die Steuerfunktionen für die Anzeigemittel (L. . .) und der Tasten (DA. . .) übernimmt.

  Derartige Schaltungsanordnungen werden insbesondere für Flugsicherungsanlagen eingesetzt.

0049211

SIEMENS AKTIENGESELLSCHAFT          Unser Zeichen
Berlin und München                  VPA 80 P 6423 E

Schaltungsanordnung für zentralgesteuerte Fernsprechanlagen, insbesondere Fernsprechnebenstellenanlagen und
private Fernsprechsonderanlagen, mit zumindest einem
Vermittlungsplatz und einer diesem zugeordneten Informationsverarbeitungseinrichtung

Die Erfindung betrifft eine Schaltungsanordnung für
zentralgesteuerte Fernsprechanlagen, insbesondere Fernsprechnebenstellenanlagen und private Fernsprechsonderanlagen, mit zumindest einem Vermittlungsplatz und einer
diesem zugeordneten Informationsverarbeitungseinrichtung, wobei der Vermittlungsplatz über eine Verbindungsleitung mit die. digitalen Informationen empfangenden
und sendenden zentralen bzw. dezentralen Einrichtungen
verbunden ist und für die Umsetzung von digital zu empfangenden und zu sendenden Informationen entsprechende
Codeumsetzer und für den Empfang und für das Senden
von Informationen entsprechende Speicher und Auswertemittel aufweist.

Derartige Fernsprechanlagen sind sowohl zum Anschluß
an private Fernsprechsondernetze als auch zum Anschluß
an die öffentlichen Fernsprechnetze geeignet. Die Vermittlungsplätze dieser Fernsprechanlagen sind je nach
Bedarf mit einer Vielzahl von Tasten und Anzeigemitteln,
wie Signallampen und Anzeigetableaus, ausgestattet,
um einerseits alle notwendigen Schaltvorgänge - vermitteln,
aufschalten, konferenzschalten, trennen etc. - steuern
und andererseits den Betriebszustand der Fernsprechanlage durch die Bedienungsperson überwachen zu können.

Kem 3 Sby / 22.09.1980

Zwischen den Vermittlungsplätzen und den Informationsverarbeitungseinrichtungen der Fernsprechanlagen werden die Sprach- und Steuersignale als digitale Informationen übertragen, so daß die Informationsverarbeitungseinrichtung neben den diversen Speichern und Auswertemitteln auch entsprechende Codeumsetzer für die zu empfangenden und sendenden Informationen aufweist.

Der Erfindung liegt die Aufgabe zugrunde, den Aufwand
für die Informationsverarbeitungseinrichtung im Verhältnis zur gewünschten Leistung, insbesondere im Hinblick
auf die Anwendung der derzeit verfügbaren Mikrocomputer
mit begrenzter Speicherkapazität, zu optimieren und
die Vielzahl der zu steuernden, unterschiedlichen Funktionen mit möglichst geringem Speicheraufwand und standardisierten Schaltungsabläufen zu realisieren.

Erfindungsgemäß wird dies dadurch erreicht, daß die
Informationsverarbeitungseinrichtung vermittlungsplatzorientiert ist und mehrere Mikrocomputer aufweist, wobei
dem Vermittlungsplatz ein für die Sprachinformationserkennung und -umsetzung vorgesehener, mit einer Synchronisiereinrichtung und einer Analog-Digital, Digital-Analog-Umsezteinrichtung zusammenarbeitender erster Mikrocomputer
sowie ein Anzeigemittel und Tastenansteuernder zweiter
Mikrocomputer zugeordnet ist.

Als wesentlich für die Erfindung ist anzusehen, daß
innerhalb der Informationsverarbeitungseinrichtung mehrere
Mikrocomputer vorgesehen sind, die unterschiedliche funktionsbezogene Aufgaben erfüllen. Während der ersten Mikrocomputer die Verarbeitung und Übertragung der Sprachinformationen übernimmt, werden durch den zweiten Mikrocomputer die Anzeigemittel und Tasten der Fernsprechanlage gesteuert. Der Einsatz der funktionsbezogenen Mikrocomputer gestattet die Verwendung relativ billiger und einfach aufgebauter Mikrocomputer mit vergleichsweise geringer Speicherkapazität.

Eine vorteilhafte Ausgestaltung der Erfindung sieht vor, daß ein dritter Mikrocomputer zur Steurung einer alpha-numerischen Anzeigeeinrichtung vorgesehen ist, so daß beispielsweise Vermittlungs- oder Konferenzschaltungen bzw. das Betätigen der entsprechenden Tasten- und Anzeigemittel für die Bedienungspersonen der Vermittlungsplätze praktisch als Kontrollrückmeldung optisch sichtbar gemacht werden.

Eine weitere vorteilhafte Ausgestaltung der Erfindung sieht vor, daß der zweite Mikrocomputer kürzere Byteinformationen, vorzugsweise Ein-Byte-Informationen, für Tastenabtastfunktionen und längere Byte-Informationen (Mehr-Byte-Informationen) für Anzeigesteuerungsfunktionen verarbeitet. Mit der Varianz der Byte-Informationslänge, die von einem Mikrocomputer bearbeitet wird, ist erreicht, daß der Arbeitszyklus zur Durchführung der Schalt- und Steuervorgänge vergleichmäßigt wird.

Eine weitere vorteilhafte Ausgestaltung der Erfindung sieht vor, daß der dritte Mikrocomputer nur Mehr-Byte-Informationen verarbeitet, so daß sichergestellt ist, daß die längere Zykluszeit zur Informationsverarbeitung dieses Mikrocomputers keine Rückwirkungen auf die Gesamtzykluszeit der beiden anderen Mikrocomputer der Informationsverarbeitungseinrichtung hat.

Die Erfindung wird anhand eines figürlich dargestellten Ausführungsbeispiels näher erläutert, wobei jedoch nur die zum Verständnis der Erfindung notwendigen Schalteinrichtungen dargestellt sind.

Die Informationsverarbeitungseinrichtung IVE enthält
die drei Mikrocomputer MC1, MC2 und MC3 sowie die Synchronisiereinrichtung CSM und die Analog-Digital-, Digital-
Analog-Umsetzeinrichtung CDF. Weiterhin steht die Synchronisiereinrichtung CSM mit der Verstärkerübertragungseinrichtung TRS in Verbindung, die ihrerseits über Verbindungsleitungen mit nicht dargestellten Übertragungseinrichtungen in der entsprechenden Fernsprechanlage verbunden ist.

Zu der vermittlungsplatzorientierten Informationsverarbeitungseinrichtung IVE gehört der Vermittlungsplatz VPL,
der mit seiner symbolsich angedeuteten Fernsprechgarnitur und/oder der Kopfgarnitur für den Funkverkehr mit
der Analog-Digital, Digital-Analog-Umsetzeinrichtung
CDF verbunden ist. Der Vermittlungsplatz VPL weist außerdem die Anzeigemittel L... und die Tasten DA... auf,
wobei die Anzeigemittel L..: jeweils über separate Lampentreiberstufen DAA und die Tasten DA... über die Abtast-
einrichtung SCN mit dem zweiten Mikrocomputer in Verbindung
stehen. Von der Synchronisiereinrichtung CSM werden
die von der Bedienungsperson des Vermittlungsplatzes
VPL verursachten digitalen Informationen dem ersten
Mikrocomputer MC1 übertragen, der die eingehende digitale Informaiton hinsichtlich ihres Ursprungs überwacht
und alle Nichtsprachinformationen zur weiteren Auswertung
an den zweiten Mikrocomputer MC2 oder an den dritten
Mikrocomputer MC3 weiterleitet.

Der zweite Mikrocompter MC2 ist sowohl zur Ansteuerung
der Lampentreiberstufen DAA als auch zur Auswertung
und Umsetzung der von der Abtast-Einrichtung SCN übertragenen Funktionstasteninformation vorgesehen, während
der dritte Mikrocomputer vorwiegend zur Steuerung der alpha-muerischen Anzeigeeinrichtung DP vorgesehen ist.

Wird von der Bedienungsperson des Vermittlungsplatzes VPL, beispielsweise zur Herstellung einer Konferenzverbindung, zwecks Zuschaltung einer weiteren Teilnehmereinrichtung die entsprechende Anschaltetaste betätigt, so wird die Tasteninformationskennung in nicht dargestellter Weise dem ersten Mikrocomputer MC1 übertragen, der mit Hilfe der Sprachinformationserkennungseinrichtung diese Information nicht verarbeitet, sondern unmittelbar an den dritten Mikrocomputer MC3 überträgt. Hier wird die Tastenkennungsinformation so aufbereitet, daß auf der alphanumerischen Anzeigeeinrichtung DP das Betätigen der Anschaltetaste optisch kenntlich gemacht wird. Die Bedienungsperson des Vermittlungsplatzes VPL kann so jederzeit den momentan veranlaßten Betriebszustand der Fernsprechanlagen überwachen.

Unter der Annahme, daß durch diese Schaltmanipulation durch die Bedienungsperson des Vermittlungsplatzes VPL zusätzlich eine Signallampe einzuschalten ist, wird in nicht dargestellter Weise die Tastenkennungsinformation vom ersten Mikrocomputer MC1 dahingehend ausgewertet, daß der zweite Mikrocomputer MC2 den Befehl zur Ansteuerung der entsprechenden Lampentreiberstufe DAA erhält und somit das entsprechende Anzeigemittel L... eingeschaltet. Die Anzeigemittel L... zeigen der Bedienungsperson des Vermittlungsplatzes VPL neben den momentan durch die Bedienungsperson verursachten Schaltvorgang auf der alphanumerischen Anzeigeeinrichtung DP den momentanen Betriebszustand der gesamten Fernsprechanlage an.

4 Ansprüche
1 Figur

<u>Patentansprüche</u>

1. Schaltungsanordnung für zentralgesteuerte Fernsprechanlagen, insbesondere Fernsprechnebenstellenanlagen und private Fernsprechsonderanlagen, mit zumindest einem Vermittlungsplatz und einer diesem zugeordneten Informationsverarbeitungseinrichtung, wobei der Vermittlungsplatz über eine Verbindungsleitung mit die digitalen Informationen empfangenden und sendenden zentralen bzw. dezentralen Einrichtungen verbunden ist und für die Umsetzung von digital zu empfangenden und zu sendenden Informationen entsprechende Codeumsetzer und für den Empfang und für das Senden von Informationen entsprechende Speicher und Auswertemittel aufweist , d a d u r c h   g e k e n n z e i c h n e t , daß die Informationsverarbeitungseinrichtung (IVE) vermittlungsplatzorientiert ist und mehrere Mikrocomputer (MC...) aufweist, wobei dem Vermittlungsplatz (VPL) ein für die Sprachinformationserkennung und -umsetzung vorgesehener, mit einer Synchronisiereinrichtung (CSM) und einer Analog-Digital-, Digital-Analog-Umsetzeinrichtung (CDF) zusammenarbeitender erster Mikrocomputer (MC1) sowie ein Anzeigemittel (L...) und Tasten (DA...) ansteuernder zweiter Mikrocomputer (MC2) zugeordnet ist.

2. Schaltungsanordnung nach Anspruch 1 , d a d u r c h   g e k e n n z e i c h n e t , daß ein dritter Mikrocomputer (MC3) zur Steuerung einer alphanumerischen Anzeigeeinrichtungen (DP) vorgesehen ist.

3. Schaltungsanordnung nach Anspruch 1 , d a d u r c h   g e k e n n z e i c h n e t , daß der zweite Mikrocomputer (MC2) kürzere Byteinformationen, vorzugsweise Ein-Byteinformationen, für Tastenabtastfunktionen und längere Byteinformationen (Mehr-Byteinformationen) für Anzeigeansteuerungsfunktionen verarbeitet.

Kem 3 Sby / 22.09.1980

4. Schaltungsanordnung nach Anspruch 3 , d a d u r c h
g e k e n n z e i c h n e t , daß der dritte Mikrocomputer
(MC3) nur Mehr-Byteinformationen verarbeitet.

80 P 6423

0049211

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.¹) |
|---|---|---|---|
| | US - A - 4 154 988 (FECHALOS)  \* Spalte 9, Zeile 29 bis Spalte 10, Zeile 9; Figur 2 \* | 1 | H 04 M 3/62  H 04 Q 3/00 |
| | INTERNATIONAL CONFERENCE ON PRIVATE ELECTRONIC SWITCHING SYSTEMS, 10-12 April 1978 London, GB D.F. GRIFFITHS et al. "A new concept in PABX operator's console" Seiten 54-59  \* Seite 54, linke Spalte, Zeile 40 bis rechte Spalte, Zeile 5; Figur 4 \* | 1 | |
| | PROCEEDINGS OF THE IEEE, Band 66, Nr. 2, Februar 1978 New York, US D.K. MELVIN: "Microcomputer applications in telephony" Seiten 182-191  \* Seite 190, linke Spalte, Zeile 16 bis rechte Spalte, Zeile 20 \* | 1 | RECHERCHIERTE SACHGEBIETE (Int. Cl.³)  H 04 M 3/60        3/62  H 04 Q  H 04 M 3/64 |
| P | THE POST OFFICE ELECTRICAL ENGINEERS JOURNAL, Band 73, Oktober 1980, Nr. 3, London, GB G. WILLETT "The operator's console for the Monarch 120 digital PABX" Seiten 138-144.  \* Seite 140, linke Spalte, Zeile 1 bis Seite 141, linke Spalte, Zeile 33 \* | 1,3 | **KATEGORIE DER GENANNTEN DOKUMENTE**  X: von besonderer Bedeutung  A: technologischer Hintergrund  O: nichtschriftliche Offenbarung  P: Zwischenliteratur  T: der Erfindung zugrunde liegende Theorien oder Grundsätze  E: kollidierende Anmeldung  D: in der Anmeldung angeführtes Dokument  L: aus andern Gründen angeführtes Dokument  &: Mitglied der gleichen Patentfamilie, übereinstimmendes Dokument |

Der vorliegende Recherchenbericht wurde für alle Patentansprüche erstellt.

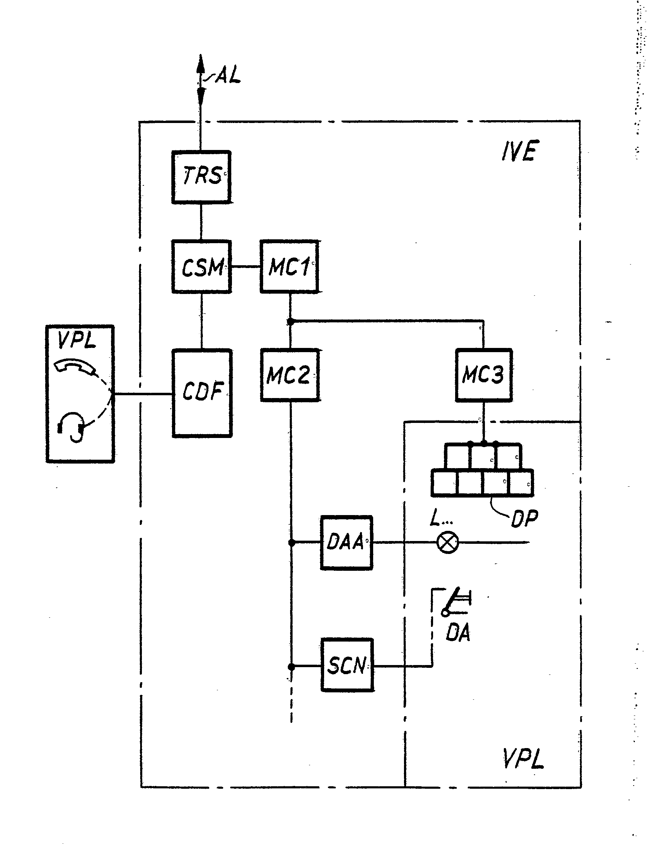

| Recherchenort | Abschlußdatum der Recherche | Prüfer |
|---|---|---|
| Den Haag | 04-01-1982 | VANDEVENNE |

EPA form 1503.1  06.78